# EUROPEAN PATENT APPLICATION

(11) **EP 4 793 090 A1**
(43) Date of publication of application: **19.08.2026**
(21) Application number: 26152351.8
(22) Date of filing: 16.01.2026
(51) Int. Cl.: B60N 2/02, B60N 2/22, B60N 2/42, B60N 2/427, B60N 2/853, B60N 2/888, B60N 2/34

(54) **VEHICLE SEAT**

(30) Priority: 12.02.2025 JP 2025020626
(71) Applicant: Toyota Jidosha Kabushiki Kaisha, Toyota-shi, Aichi-ken 471-8571 (JP)
(72) Inventor: HAYASHI, Shigeki, TOYOTA-SHI, AICHI-KEN, 471-8571 (JP)
(74) Representative: Cabinet Beau de Loménie

(57) **Abstract**

A vehicle seat includes a seatback that is tiltable backward; and a headrest provided at the seatback. In a case in which a backward tilting angle of the seatback is at least a predetermined angle and a frontal collision of the vehicle is predicted, the headrest is configured to move toward a seat front-upper side relative to the seatback.

## Description

### BACKGROUND

### Technical Field

The present disclosure relates to a seat for a vehicle.

### Related Art

A driving assistance device for a vehicle has been known since heretofore (for example, see International Patent Publication No. 2015/011866) that controls a reclining angle of a seatback to be a larger reclining angle in an autonomous driving mode than a reclining angle in a manual driving mode.

A driving position control device has also been known since heretofore (for example, see Japanese Patent Application Laid-Open (JP-A) No. 2016-168972) that, when switching from manual driving to autonomous driving, moves a seat apparatus to a second position that is a more relaxed attitude than a first position, which is suitable for manual driving.

### SUMMARY

With the spread of autonomous driving, running in a reclining attitude (a relaxed attitude) in which a seatback is tilted backward greatly as mentioned above is expected. However, at a time of frontal collision of a vehicle, an effect of retroflexion of the neck may occur due to a difference in motion between the chest area and head of a vehicle occupant in a reclining attitude.

That is, in a frontal collision of the vehicle, in side view, the chest area of the vehicle occupant moves to the front side in a rotating motion centered on the pelvis area but the head of the vehicle occupant moves translationally to the front side while maintaining an initial angle. As a result, a moment load on the neck of the vehicle occupant is large and there is a high probability of a retroflexion effect occurring at the neck of the vehicle occupant.

Accordingly, the present disclosure provides a vehicle seat that decreases occurrence of a retroflexion effect on the neck of a vehicle occupant if the vehicle has a frontal collision while running in a state in which a seatback is tilted backward by a predetermined angle or more.

A vehicle seat according to a first aspect of the present disclosure includes: a seatback that is tiltable backward; and a headrest provided at the seatback, wherein, in a case in which a backward tilting angle of the seatback is at least a predetermined angle and a frontal collision of the vehicle is predicted, the headrest is configured to move toward a seat front-upper side relative to the seatback.

According to the disclosure of the first aspect, the headrest provided at the seatback is configured to move toward the seat front-upper side relative to the seatback in the event that the backward tilting angle of the seatback that is tiltable backward is at least the predetermined angle that a frontal collision of the vehicle is predicted. Even when the chest area of a vehicle occupant moves to the front side in a rotating motion centered on the pelvis area in association with the frontal collision of the vehicle, the head of the vehicle occupant is pushed by the headrest moving to the seat front-upper side, is imperatively put into a forward inclined attitude and then moves translationally to the front side. Therefore, a moment load on the neck of the vehicle occupant is reduced. An occurrence of a retroflexion effect on the neck of the vehicle occupant is decreased.

In a vehicle seat according to a second aspect of the present disclosure, in the vehicle seat according to the first aspect, the seatback includes a seatback frame, a headrest moving mechanism is provided at an upper portion of the seatback frame, the headrest moving mechanism includes a stay seat that supports a headrest stay of the headrest. In the case in which the backward tilting angle of the seatback is at least the predetermined angle and the frontal collision of the vehicle is predicted, the headrest moving mechanism rotates the stay seat to the seat front side and causes the headrest to move toward the seat front-upper side, a front end portion of the stay seat serving as a rotation pivot.

According to the disclosure of the second aspect, the headrest moving mechanism is provided at the upper portion of the seatback frame structuring the seatback. The headrest moving mechanism includes the stay seat that supports the headrest stay of the headrest. In the event that the backward tilting angle of the seatback is at least the predetermined angle when the frontal collision of the vehicle is predicted, the headrest moving mechanism rotates the stay seat to the seat front side about the rotation pivot at the front end portion of the stay seat, and causes the headrest to move toward the seat front-upper side. Thus, imperatively putting the head of the vehicle occupant into the forward inclined attitude may be easily achieved with a simple structure.

In a vehicle seat according to a third aspect of the present disclosure, in the vehicle seat according to the second aspect, the headrest moving mechanism moves the headrest such that the headrest pushes a rear head area of a head of a seated occupant, the rear head area being at an upper side relative to a center of gravity of the head.

According to the disclosure of the third aspect, the headrest moving mechanism moves the headrest such that the headrest may push the rear head area of the seated vehicle occupant that is at the upper side relative to the center of gravity of the head. Thus, the head of the vehicle occupant is put into the forward inclined attitude.

In a vehicle seat according to a fourth aspect of the present disclosure, in the vehicle seat according to the second aspect or the third aspect, the headrest moving mechanism does not activate when the backward tilting angle of the seatback is less than the predetermined angle, and, when the backward tilting angle of the seatback is greater than the predetermined angle, a movement amount of the headrest is increased in accordance with an amount of increase of the backward tilting angle.

According to the disclosure of the fourth aspect, when the backward tilting angle of the seatback is less than the predetermined angle, the headrest moving mechanism does not activate. Therefore, even though the headrest moving mechanism is provided, the headrest moving mechanism does not cause a hindrance during a frontal collision of the vehicle in a manual driving mode. In addition, when the backward tilting angle of the seatback is greater than the predetermined angle, a movement amount of the headrest by the headrest moving mechanism is increased in accordance with an amount of increase of the backward tilting angle. Therefore, the head of the vehicle occupant may adopt a forward inclined attitude that is suitable for the backward tilting angle of the seatback, and an occurrence of a retroflexion effect on the neck of the vehicle occupant is decreased.

In a vehicle seat according to a fifth aspect of the present disclosure, in the vehicle seat according to the first aspect, the seatback includes: an upper seatback at which the headrest is provided; a lower seatback that supports the upper seatback rotatably in a seat front-rear direction; and a seatback turning mechanism that rotates the upper seatback toward the seat front side relative to the lower seatback. In the case in which the backward tilting angle of the lower seatback is at least the predetermined angle and the frontal collision of the vehicle is predicted, the seatback turning mechanism activates.

According to the disclosure of the fifth aspect, the seatback includes the upper seatback at which the headrest is provided, the lower seatback that supports the upper seatback rotatably in the seat front-and-rear direction, and the seatback turning mechanism that rotates the upper seatback toward the seat front side relative to the lower seatback. The seatback turning mechanism activates in the event that the backward tilting angle of the lower seatback is at least the predetermined angle when the frontal collision of the vehicle is predicted.

Even if the headrest moving mechanism is not provided, the head of the vehicle occupant can be pushed and imperatively put into the forward inclined attitude by the headrest being moved to the seat front-upper side by the seatback turning mechanism. An occurrence of a retroflexion effect on the neck of the vehicle occupant is decreased. In addition, because the upper torso area of the vehicle occupant is moved toward the seat front side by the upper seatback, an initial gap between a seatbelt and the chest area of the vehicle occupant is reduced, and a protective effect against the chest area of the vehicle occupant is improved. Moreover, because the headrest moving mechanism is not provided, structures of the seatback can be made simpler.

In a vehicle seat according to a sixth aspect of the present disclosure, in the vehicle seat according to any one of the second to fourth aspects, the seatback includes: an upper seatback at which the headrest and the headrest moving mechanism are provided; a lower seatback that supports the upper seatback rotatably in a seat front-rear direction; and a seatback turning mechanism that rotates the upper seatback toward the seat front side relative to the lower seatback. In the case in which the backward tilting angle of the lower seatback is at least the predetermined angle and the frontal collision of the vehicle is predicted, the seatback turning mechanism and the headrest moving mechanism activate.

According to the disclosure of the sixth aspect, the seatback includes the upper seatback at which the headrest and the headrest moving mechanism are provided, the lower seatback that supports the upper seatback rotatably in the seat front-rear direction, and the seatback turning mechanism that rotates the upper seatback toward the seat front side relative to the lower seatback. The seatback turning mechanism and the headrest moving mechanism activate in the event that the backward tilting angle of the lower seatback is at least the predetermined angle when the frontal collision of the vehicle is predicted.

The head of the vehicle occupant can be pushed and imperatively put into the forward inclined attitude by the headrest being moved further to the seat front-upper side by the seatback turning mechanism and the headrest moving mechanism. An occurrence of a retroflexion effect on the neck of the vehicle occupant is decreased. In addition, because the upper torso area of the vehicle occupant is moved greatly toward the seat front side by the upper seatback, an initial gap between a seatbelt and the chest area of the vehicle occupant is reduced, and a protective effect against the chest area of the vehicle occupant is improved.

As described above, according to the present disclosure, an occurrence of a retroflexion effect on the neck of a vehicle occupant may be decreased even if the vehicle is in a frontal collision during running in a state in which the seatback is tilted backward by more than a predetermined angle.

### BRIEF DESCRIPTION OF THE DRAWINGS

Fig. 1 is a schematic side view showing a state in which a vehicle occupant has adopted a reclining attitude on a vehicle seat according to a first exemplary embodiment;
Fig. 2 is a schematic side view showing a magnification of a state before activation of a headrest moving mechanism according to the first exemplary embodiment;
Fig. 3 is a schematic side view showing a magnification of a state after activation of the headrest moving mechanism according to the first exemplary embodiment;
Fig. 4 is a schematic side view showing a state of the neck of the vehicle occupant after the activation of the headrest moving mechanism according to the first exemplary embodiment;
Fig. 5 is a schematic side view showing a state of the vehicle occupant after a frontal collision occurring after the activation of the headrest moving mechanism according to the first exemplary embodiment;
Fig. 6 is a flowchart showing operation of the vehicle seat according to the first exemplary embodiment;
Fig. 7 is a graph showing headrest movement amounts corresponding to seatback angles of the vehicle seat according to the first exemplary embodiment;
Fig. 8 is a schematic side view showing a magnification of a state before activation of a headrest moving mechanism according to a second exemplary embodiment;
Fig. 9 is a schematic side view showing a magnification of a state after activation of the headrest moving mechanism according to the second exemplary embodiment;
Fig. 10 is a schematic side view showing a magnification of a state after activation of a headrest moving mechanism according to a third exemplary embodiment; and
Fig. 11 is a schematic side view showing a state after a frontal collision of a vehicle occupant who had adopted a reclining attitude on a vehicle seat according to a comparative example.

### DETAILED DESCRIPTION

Exemplary embodiments relating to the present disclosure are described in detail in accordance with the drawings. For convenience of description, the arrow UP that is shown as appropriate in the drawings indicates a seat upper direction and the arrow FR indicates a seat front direction. Where the directions upper, lower, front, rear, left and right are used below without being particularly specified, the same indicate upper, lower, front, rear, left and right of the seat. The left-and-right direction is the same as the seat width direction.

### = First Exemplary Embodiment =

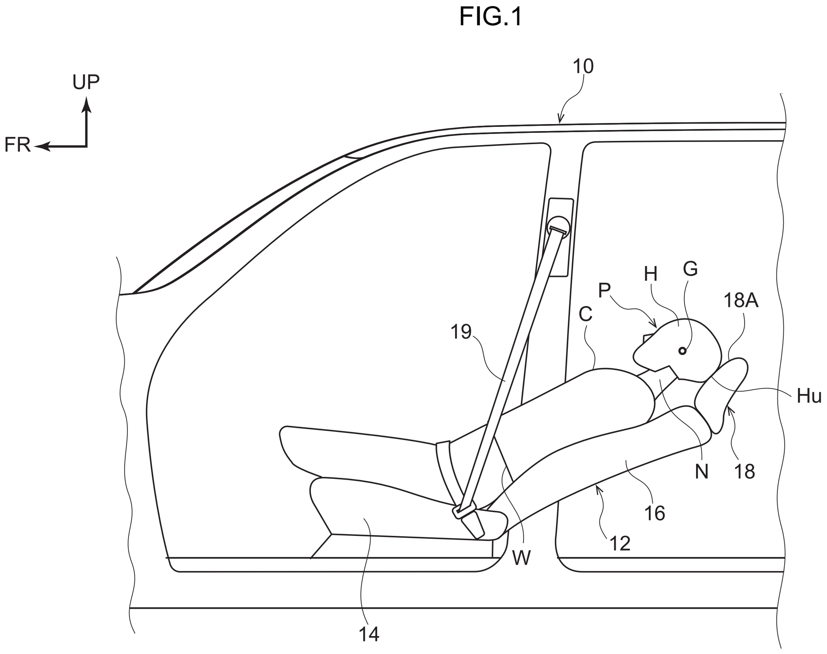

Firstly, a first exemplary embodiment is described. As shown in Fig. 1, a vehicle seat 12 according to the first exemplary embodiment is provided to serve as, for example, a front seat of a vehicle 10 with an autonomous driving mode. The vehicle seat 12 includes a seat cushion 14, a seatback 16 and a headrest 18. The seatback 16 is provided at a rear end portion of the seat cushion 14 to be tiltable backward and forward about an axial direction that is in the width direction. The headrest 18 is provided to be movable up and down at a seat width direction central portion of an upper end portion of the seatback 16.

Fig. 1 and so forth depict a state in which a crash test dummy (a human body dummy) serving as a model of a vehicle occupant (seat occupant) who should be protected is seated on the vehicle seat 12. The dummy is, for example, a frontal crash test dummy (Hybrid III), AM 50 (the 50th percentile of American adult males). Below, the dummy is referred to as "the occupant P". The occupant P is restrained at the vehicle seat 12 by a three-point seatbelt device. A portion of a seatbelt 19 is applied diagonally from a shoulder area to a pelvis area of the occupant P.

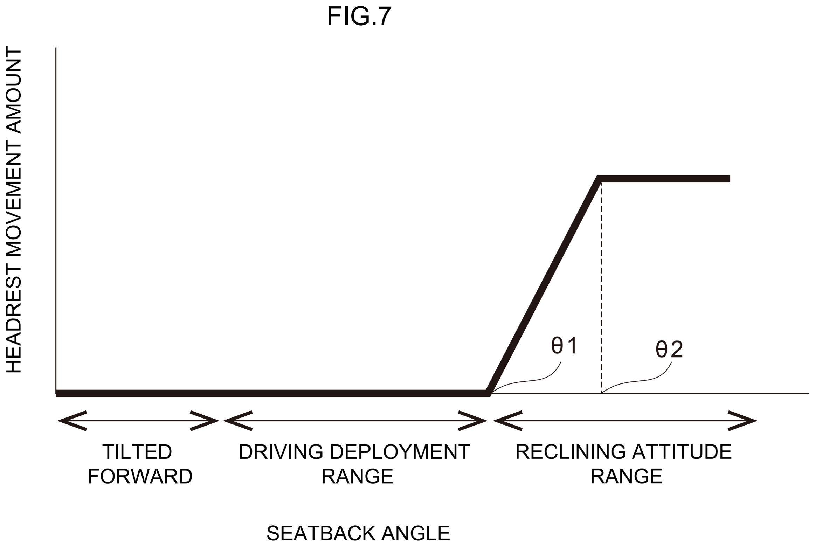

As shown in Fig. 1, when the vehicle 10 is in the autonomous driving mode, the occupant P may adopt a reclining attitude in which the seatback 16 is tilted backward by at least a predetermined angle θ1 (see Fig. 7) relative to the perpendicular direction. Fig. 1 shows a state in which, as an example, the seatback 16 is tilted backward by 60° (the angle θ2 in Fig. 7) relative to the perpendicular direction. The predetermined angle θ1 is, for example, 30°. A backward tilting angle of the seatback 16 is detected by a detection sensor or the like that is not shown in the drawings.

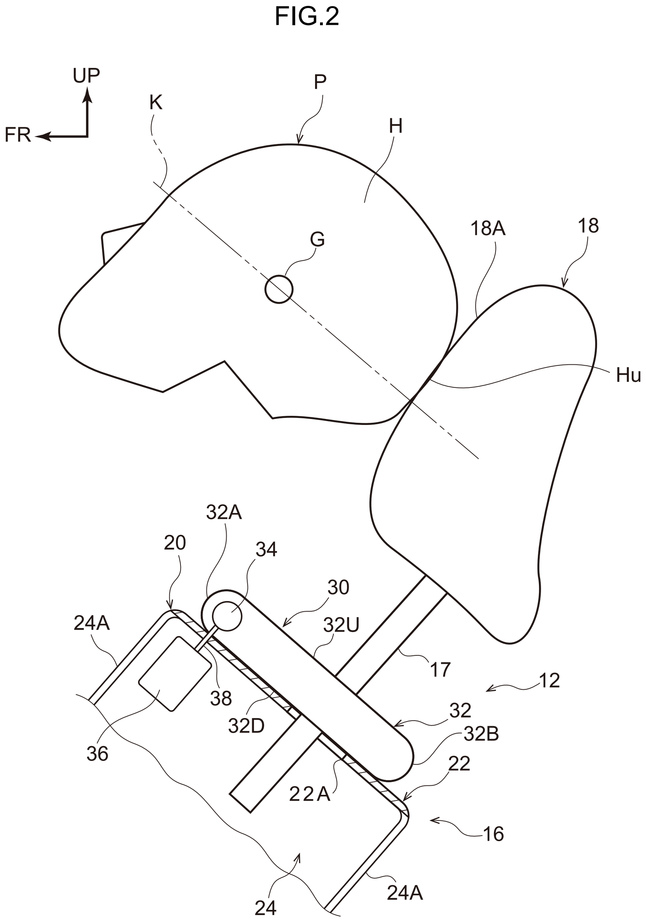

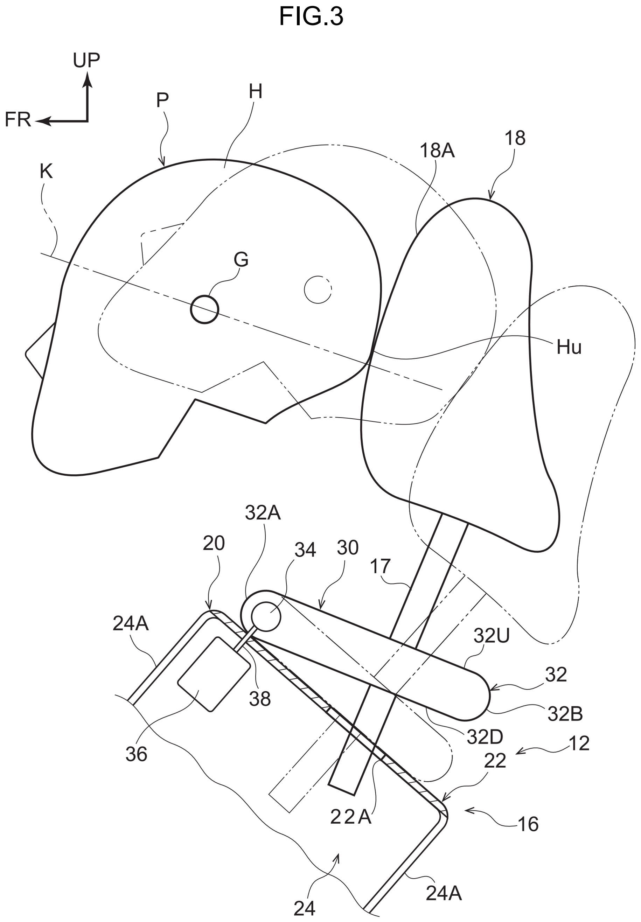

As shown in Fig. 2 and Fig. 3, a seatback frame 20 that is fabricated of metal is provided inside the seatback 16. The seatback frame 20 includes an upper frame 22 and a left and right pair of side frames 24. The upper frame 22 is formed in a substantially rectangular flat board shape whose longer direction is in the seat width direction. Upper end portions of the side frames 24 are integrally connected with both of seat width direction outer side end portions of the upper frame 22. Only the side frame 24 at the right side is shown in Fig. 2 and Fig. 3.

In a side view seen in the width direction, the side frame 24 is formed in a substantially rectangular flat board shape whose longer direction is in a vertical direction. A front end portion and rear end portion of the side frame 24 are each formed as flange portions 24A that are inflected to the width direction inner side. As a result, the side frame 24 is a structure with improved strength.

A headrest moving mechanism 30 is provided at an upper face side of the upper frame 22. The headrest moving mechanism 30 includes a stay seat 32, a turning axle 34 and an electric motor 36. The stay seat 32 supports headrest stays 17 of the headrest 18 to allow movement up and down. The turning axle 34 is provided at a front end portion of the stay seat 32 with an axial direction in the width direction. The electric motor 36 is a drive source that drives to rotate the turning axle 34.

The stay seat 32 is fabricated of, for example, metal and is formed in a rectangular box shape with a predetermined thickness. Each headrest stay 17 is inserted into penetrating holes (not shown in the drawings) formed at an upper wall 32U and a lower wall 32D of the stay seat 32. The headrest stay 17 may be locked at a desired position by a locking mechanism (not shown in the drawings) that is provided inside the stay seat 32. A lower portion of the headrest stay 17 inserted through the penetrating holes of the stay seat 32 is inserted into a long hole portion 22A that is formed at the upper frame 22 with a longer direction in the front-and-rear direction.

The turning axle 34 penetrates through and is fixed to a front end portion 32A of the stay seat 32. The turning axle 34 is rotated in the counterclockwise direction of the drawings by rotary driving force from the electric motor 36. Thus, as illustrated in Fig. 3, the turning axle 34 can be rotated such that a rear end portion 32B of the stay seat 32 is raised, that is, such that the stay seat 32 is rotated to the front side. As a result, the headrest 18 moves toward a front-upper side (in a front-upper direction) relative to the seatback 16.

The long hole portion 22A formed at the upper frame 22 is formed with a length long enough to not impede movement to the rear side of a portion of the headrest stay 17 that is at the lower side relative to the stay seat 32 when the headrest 18 moves to the front-upper side (in the front-upper direction).

The headrest 18 moving to the front-upper side pushes a rear head area Hu of the head H of the occupant P. The rear head area Hu is at an upper side relative to a center of gravity G of the head H. That is, a front face 18A of the headrest 18 abuts against a predetermined region of the rear head area Hu that is disposed at the upper side relative to an imaginary line K shown in Fig. 2 and Fig. 3. The imaginary line K passes through the center of gravity G of the head H of the occupant P.

The "imaginary line K" referred to herein is an imaginary horizontal line that passes through the center of gravity G of the head H when the occupant P is in an upright standing state and facing forward. Therefore, when the occupant P has adopted a reclining state in which the seatback 16 is tilted backward by at least the predetermined angle θ1 relative to the perpendicular direction, the imaginary line K is a straight line that is inclined relative to the front-and-rear direction, as shown in Fig. 2 and Fig. 3.

The electric motor 36 is disposed at the lower side of the upper frame 22, at the inner side of an upper portion of one of the side frames 24 (for example, the side frame 24 at the right side). A motor shaft 38 of the electric motor 36 is connected to one axial direction end portion (for example, a right end portion) of the turning axle 34 via a gearbox, which is not shown in the drawings. Thus, rotary driving force of the electric motor 36 is transmitted via the gearbox to the turning axle 34. A control device, which is not shown in the drawings, is electronically connected to the electric motor 36.

The control device is provided in the vehicle 10 and is electronically connected to the above-mentioned detection sensor that detects the backward tilting angle of the seatback 16, a prediction sensor (not shown in the drawings) that predicts a frontal collision of the vehicle 10, and the like. Accordingly, when the backward tilting angle of the seatback 16 relative to the perpendicular direction is at least the predetermined angle θ1 and a frontal collision of the vehicle 10 is predicted, the control device may activate the electric motor 36 (the headrest moving mechanism 30).

That is, if the backward tilting angle of the seatback 16 relative to the perpendicular direction is at least the predetermined angle θ1 when a frontal collision of the vehicle 10 is predicted, the control device drives the electric motor 36, causing the stay seat 32 to rotate to the forward side with the front end portion 32A serving as the rotating pivot, and causing the headrest 18 to move to the front-upper side.

When the backward tilting angle of the seatback 16 relative to the perpendicular direction is in a predetermined range of at least the predetermined angle θ1 or more relative to the perpendicular direction, more specifically, in a range from angle θ1 to angle θ2 as illustrated in Fig. 7 (for example, θ1=30° and θ2=60°), the control device increases a movement amount of the headrest 18 in accordance with an amount of increase of the backward tilting angle. That is, the control device adjusts a rotary driving amount of the electric motor 36 so as to adjust the movement amount of the headrest 18 in accordance with the backward tilting angle of the seatback 16.

When the backward tilting angle of the seatback 16 relative to the perpendicular direction is more than the predetermined angle θ2, the movement amount of the headrest 18 is kept constant at a maximum value (see Fig. 7). In addition, when the backward tilting angle of the seatback 16 relative to the perpendicular direction is less than the predetermined angle θ1 (the "driving deployment range" in Fig. 7) and when the seatback 16 is tilted forward ("tilted forward" in Fig. 7), the control device does not activate the electric motor 36 (the headrest moving mechanism 30).

The following operations are described for the vehicle seat 12 according to the first exemplary embodiment with the structure described above.

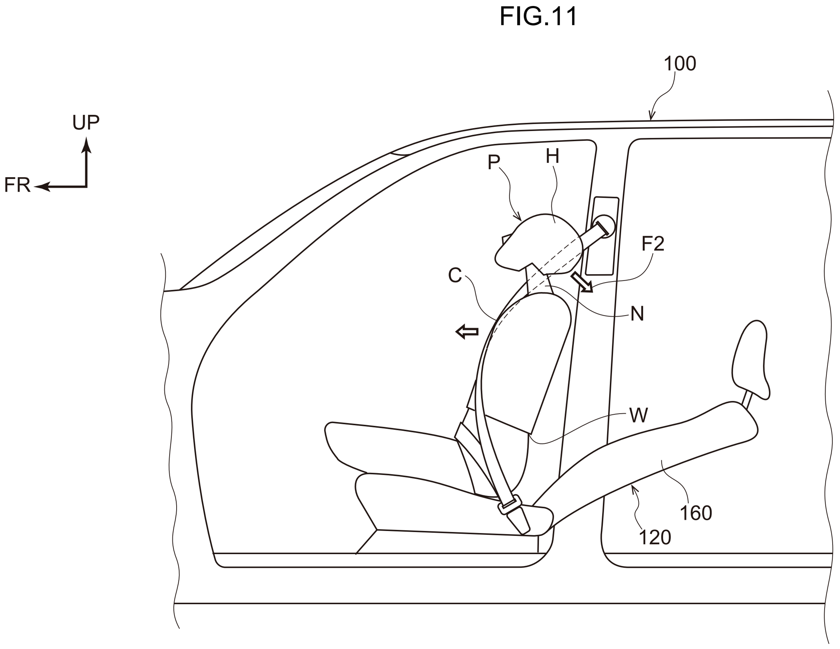

First, a comparative example shown in Fig. 11 is described. The headrest moving mechanism 30 is not provided at a vehicle seat 120 according to the comparative example. While a vehicle 100 according to the comparative example is in an autonomous driving mode, an occupant P adopts a reclining attitude (a relaxed attitude) in which a seatback 160 is greatly tilted backward. If the vehicle 100 has a frontal collision in this state, an effect of retroflexion of the neck N may occur due to a difference in motion between the chest area C and head H of the occupant P.

That is, in a frontal collision of the vehicle 100, in side view, the chest area C of the occupant P moves to the front side in a rotating motion centered on the pelvis area W but the head H of the occupant P moves translationally to the front side while maintaining an initial angle. As a result, a moment load on the neck N of the occupant P, as indicated by arrow F2 in Fig. 11, is large and there is a risk of a retroflexion effect occurring at the neck N of the occupant P.

In contrast, in the vehicle seat 12 according to the present exemplary embodiment as shown in Fig. 2 and Fig. 3, the headrest moving mechanism 30 is provided. Therefore, while the vehicle 10 is in an autonomous driving mode, even if the vehicle 10 has a frontal collision in a state in which the occupant P has adopted a reclining attitude (a relaxed attitude) in which the seatback 16 is greatly tilted backward, a retroflexion effect on the neck N of the occupant P is less likely to occur.

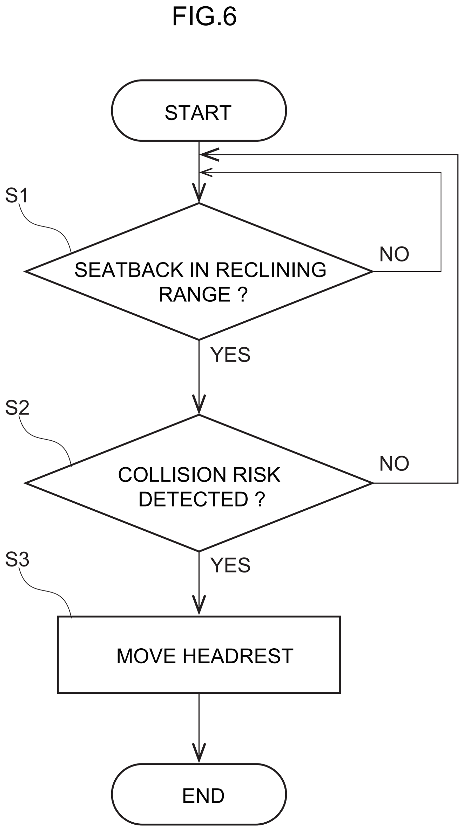

To describe this on the basis of the flowchart shown in Fig. 6, firstly, a backward tilting angle of the seatback 16 is detected by the detection sensor, and the control device makes a determination as to whether the seatback 16 has adopted a reclining range (step S1). That is, the control device determines whether or not the seatback 16 is tilted backward by at least the predetermined angle θ1 relative to the perpendicular direction. The seatback 16 being tilted backward by at least the predetermined angle θ1 relative to the perpendicular direction signifies that the vehicle 10 is in the autonomous driving mode. When the seatback 16 is at an angle of less than the predetermined angle θ1 relative to the perpendicular direction, the control device returns to step S1.

When the control device determines that the seatback 16 is tilted backward by at least the predetermined angle θ1 relative to the perpendicular direction, which is to say that the vehicle 10 is in the autonomous driving mode, the control device then makes a prediction as to whether or not the vehicle 10 will be in a frontal collision according to the prediction sensor (step S2). A term "collision risk detected" as used herein is intended to have the same meaning as "collision predicted". When a frontal collision of the vehicle 10 is not predicted, the control device returns to step S1.

When a frontal collision of the vehicle 10 is predicted, the control device activates the headrest moving mechanism 30. That is, the control device drives the electric motor 36 to rotate, the turning axle 34 is rotated in the counterclockwise direction of the drawings and, as shown in Fig. 3, the stay seat 32 is rotated to the front side. Because the stay seat 32 supports the headrest stay 17, the headrest 18 moves to the front-upper side together with the rotation of the stay seat 32 to the front side (step S3).

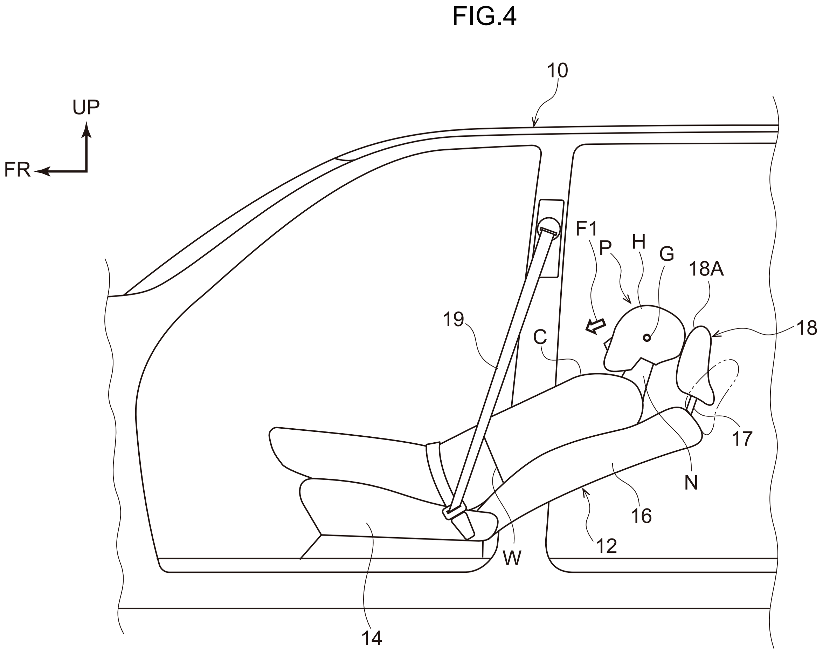

This state is shown in Fig. 4. That is, when a frontal collision of the vehicle 10 is predicted in a state in which the occupant P has adopted the reclining attitude (relaxed attitude) in which the seatback 16 is tilted backward greatly, the headrest 18 moves to the front-upper side and pushes the predetermined region of the rear head area Hu (see Fig. 3) of the head H of the occupant P. Thus, the head H of the occupant P is imperatively put into a forward inclined attitude, as indicated by arrow F1 in Fig. 4. Subsequent to this state, the vehicle 10 undergoes the frontal collision.

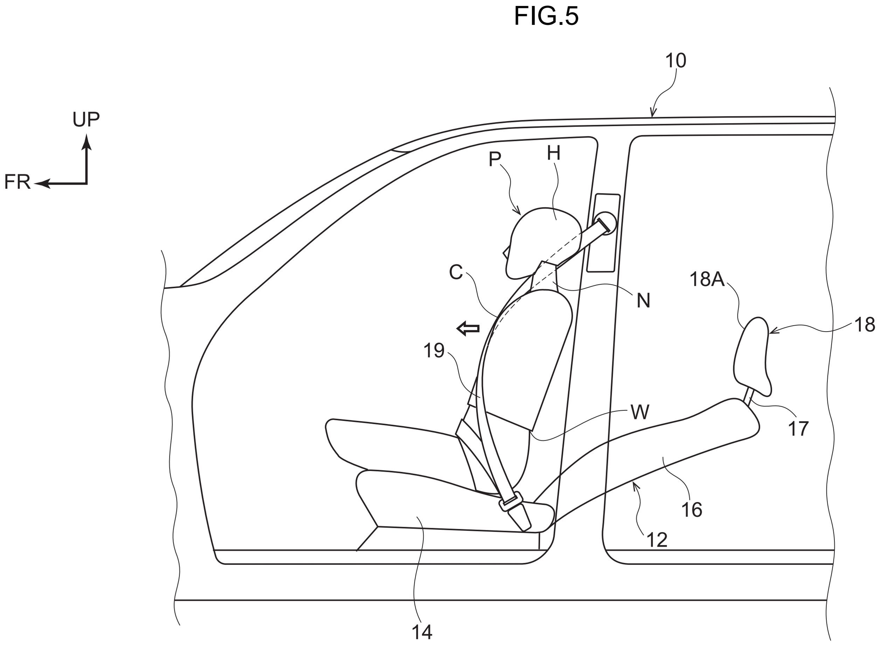

Hence, even when the chest area C of the occupant P moves to the front side in a rotary motion centered on the pelvis area W due to inertial force associated with the frontal collision of the vehicle, the head H of the occupant P, that has being put into the forward inclined attitude, moves translationally to the front side. Therefore, a moment load to the rear side on the neck N of the occupant P is reduced, as illustrated in Fig. 5. Consequently, an occurrence of a retroflexion effect on the neck N of the occupant P may be decreased or prevented.

When the backward tilting angle of the seatback 16 relative to the perpendicular direction is at least the predetermined angle θ1 and the frontal collision of the vehicle 10 is predicted, the headrest moving mechanism 30 rotates the stay seat 32 to the forward side about the rotating pivot at the front end portion 32A to move the headrest 18 to the front-upper side. Therefore, imperatively putting the head H of the occupant P into the forward inclined attitude may be easily achieved with a simple structure.

The headrest moving mechanism 30 moves the headrest 18 to the front-upper side such that the headrest 18 may push the predetermined region of the rear head area Hu of the occupant P that is at the upper side relative to the center of gravity G of the head H. Thus, the head H of the occupant P may be put into the forward inclined attitude effectively.

When the backward tilting angle of the seatback 16 relative to the perpendicular direction is less than the predetermined angle θ1 (in the "driving deployment range" in Fig. 7), the headrest moving mechanism 30 does not activate. Therefore, even though the vehicle seat 12 is equipped with the headrest moving mechanism 30, there is no risk of the headrest 18 moving to the front side and causing a hindrance during a frontal collision of the vehicle in the manual driving mode.

When the backward tilting angle of the seatback 16 relative to the perpendicular direction is greater than the predetermined angle θ1, more specifically between the angle θ1 and the angle θ2, a movement amount of the headrest 18 by the headrest moving mechanism 30 is increased in accordance with an amount of increase of the backward tilting angle. Therefore, the head H of the occupant P may adopt a forward inclined attitude that is suitable for the backward tilting angle of the seatback 16, and an occurrence of a retroflexion effect on the neck N of the occupant P may be decreased effectively or prevented.

### = Second Exemplary Embodiment =

Now, a second exemplary embodiment is described. Portions that are the same as in the above-described first exemplary embodiment are assigned the same reference numerals and, as appropriate, are not described in detail.

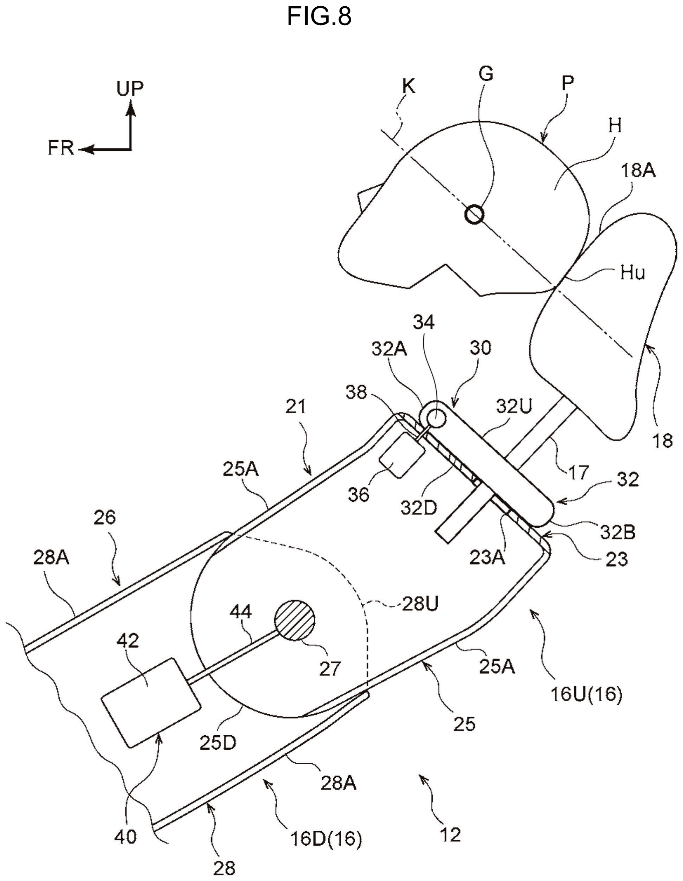

As shown in Fig. 8, the second exemplary embodiment differs from the first exemplary embodiment described above in that the seatback 16 is structured to include an upper seatback 16U, a lower seatback 16D and a seatback turning mechanism 40. The headrest 18 is provided at the upper seatback 16U. The lower seatback 16D supports the upper seatback 16U to be rotatable in the front-and-rear direction. The seatback turning mechanism 40 causes the upper seatback 16U to rotate toward the front side relative to the lower seatback 16D.

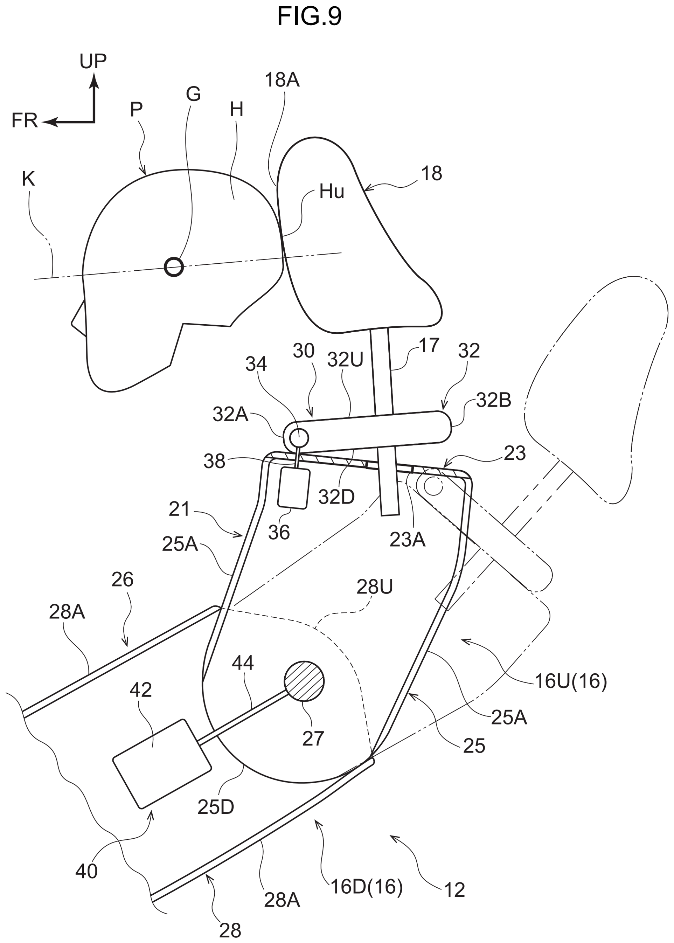

An upper seatback frame 21 that is fabricated of metal is provided inside the upper seatback 16U. The upper seatback frame 21 includes an upper frame 23 and a left and right pair of upper side frames 25. The upper frame 23 is formed in a substantially rectangular flat board shape whose longer direction is in the width direction. Upper end portions of the upper side frames 25 are integrally connected with both of width direction outer side end portions of the upper frame 23. Only the upper side frame 25 at the right side is shown in Fig. 8 and Fig. 9. A long hole portion 23A is formed at the upper frame 23. The long hole portion 23A is similar to the long hole portion 22A according to the first exemplary embodiment described above.

In a side view seen in the width direction, the upper side frame 25 is formed in a substantially rectangular flat board shape whose longer direction is in a vertical direction. A lower end portion 25D of the upper side frame 25 is formed in a substantially circular arc shape. A front end portion and rear end portion of the upper side frame 25, excluding the lower end portion 25D, are each formed as flange portions 25A that are inflected to the width direction inner side. Thus, the upper side frame 25 is a structure with improved strength.

A lower seatback frame 26 that is fabricated of metal is provided inside the lower seatback 16D. The lower seatback frame 26 includes a left and right pair of lower side frames 28. Only the lower side frame 28 at the right side is shown in Fig. 8 and Fig. 9. In a side view seen in the width direction, the lower side frame 28 is formed in a substantially rectangular flat board shape whose longer direction is in a vertical direction. An upper end portion 28U of the lower side frame 28 is formed in a substantially circular arc shape.

A front end portion and rear end portion of the lower side frame 28, excluding the upper end portion 28U, are each formed as flange portions 28A that are inflected to the width direction inner side. Thus, the lower side frame 28 is a structure with improved strength. Lower portions of the upper side frames 25 are disposed to be superposed with inner sides of upper portions of the lower side frames 28. The lower side frames 28 and the upper side frames 25 are rotatably connected by a turning axle 27 with an axial direction in the width direction, which spans between the upper portions of the left and right lower side frames 28.

That is, front-and-rear direction central portions of the lower portions of the upper side frames 25 are fixed to two end portions in the axial direction of the turning axle 27, and front-rear direction central portions of the upper portions of the lower side frames 28 rotatably support the two axial direction end portions of the turning axle 27. Thus, when the turning axle 27 is rotated in the counterclockwise direction of the drawings by rotary driving force from the seatback turning mechanism 40, the upper seatback 16U rotates toward the front side relative to the lower seatback 16D, as shown in Fig. 9.

The seatback turning mechanism 40 includes an electric motor 42 that serves as a drive source driving to rotate the turning axle 27. The electric motor 42 is disposed at the inner side of one of the lower side frames 28 (for example, the lower side frame 28 at the right side). A motor shaft 44 of the electric motor 42 is connected to one axial direction end portion (for example, a right end portion) of the turning axle 27 via a gearbox, which is not shown in the drawings. Thus, rotary driving force of the electric motor 42 is transmitted via the gearbox to the turning axle 27.

The aforementioned control device is electronically connected to the electric motor 42. That is, the second exemplary embodiment is configured such that, when a backward tilting angle of the lower seatback 16D relative to the perpendicular direction is at least the predetermined angle θ1 and a frontal collision of the vehicle 10 is predicted, both the headrest moving mechanism 30 and the seatback turning mechanism 40 are activated.

The following operations are described for the vehicle seat 12 according to the second exemplary embodiment with the structure described above. Descriptions of operations that are the same as in the first exemplary embodiment are omitted as appropriate.

As described above, the seatback 16 according to the second exemplary embodiment includes the upper seatback 16U, at which the headrest 18 and the headrest moving mechanism 30 are provided, the lower seatback 16D, which supports the upper seatback 16U to be rotatable in the front-and-rear direction, and the seatback turning mechanism 40, which causes the upper seatback 16U to rotate in the front-rear direction relative to the lower seatback 16D.

When a backward tilting angle of the lower seatback 16D relative to the perpendicular direction is at least the predetermined angle θ1 and a frontal collision of the vehicle 10 is predicted, the seatback turning mechanism 40 and the headrest moving mechanism 30 activate. Thus, the head H of the occupant P is pushed by the headrest 18 being moved greatly to the front-upper side by the seatback turning mechanism 40 and the headrest moving mechanism 30, and the head H is imperatively and effectively put into the forward inclined attitude. Consequently, an occurrence of a retroflexion effect on the neck N of the occupant P may be decreased effectively or prevented.

In the second exemplary embodiment, the upper torso area of the occupant P is moved greatly to the front side by the upper seatback 16U. Therefore, an initial gap between the seatbelt 19 and the chest area C of the occupant P may be reduced, and a protective effect against the chest area C of the occupant P may be improved. In the second exemplary embodiment, the seatback turning mechanism 40 and the headrest moving mechanism 30 may be activated selectively in accordance with backward tilting angles of the lower seatback 16D that are at least the predetermined angle θ1 relative to the perpendicular direction.

### = Third Exemplary Embodiment =

Lastly, a third exemplary embodiment is described. Portions that are the same as in the above-described first exemplary embodiment and second exemplary embodiment are assigned the same reference numerals and, as appropriate, are not described in detail (including operations that are the same).

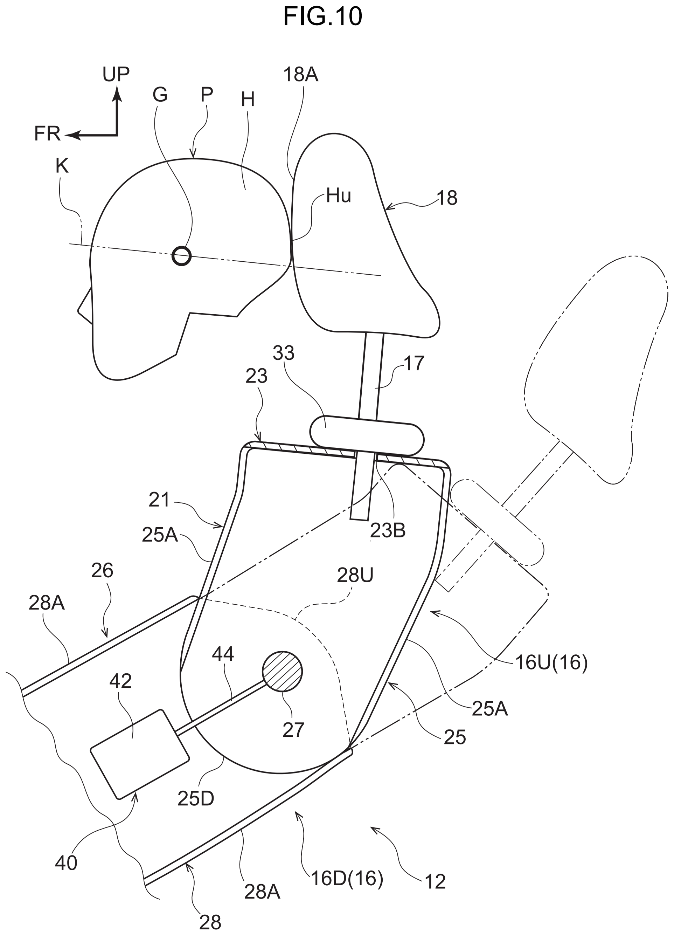

As shown in Fig. 10, the third exemplary embodiment differs from the second exemplary embodiment described above only in that the headrest moving mechanism 30 is not provided. That is, a stay seat 33 according to the third exemplary embodiment is fixed to an upper face of the upper frame 23. Accordingly, a circular hole portion 23B is formed in the upper frame 23 instead of the long hole portion 23A. The hole portion 23B has an inner diameter slightly larger than an outer diameter of the headrest stay 17. A lower portion of the headrest stay 17 is inserted into the hole portion 23B.

According to the third exemplary embodiment, when the backward tilting angle of the lower seatback 16D relative to the perpendicular direction is at least the predetermined angle θ1 and a frontal collision of the vehicle 10 is predicted, only the seatback turning mechanism 40 activates. That is, even though the headrest moving mechanism 30 is not provided in the third exemplary embodiment, the headrest 18 is moved to the front-upper side by the upper seatback 16U rotating toward the front side relative to the lower seatback 16D.

Thus, the head H of the occupant P is pushed by the headrest 18 moving to the front-upper side and is imperatively put into the forward inclined attitude. Therefore, an occurrence of a retroflexion effect on the neck N of the occupant P may be decreased or prevented. In the third exemplary embodiment, the upper torso area of the occupant P is moved to the front side by the upper seatback 16U. Therefore, an initial gap between the seatbelt 19 and the chest area C of the occupant P may be reduced, and a protective effect against the chest area C of the occupant P may be improved. Moreover, because the headrest moving mechanism 30 is not provided in the third exemplary embodiment, structures of the seatback 16 may be made simpler than in the second exemplary embodiment.

Above, the vehicle seat 12 according to the present exemplary embodiments is described by reference to the drawings. However, the vehicle seat 12 according to the present exemplary embodiments is not limited to the configurations shown in the drawings; suitable design modifications may be applied within a scope not departing from the technical scope of the present disclosure. For example, the vehicle seat 12 according to the present exemplary embodiment may be provided in a vehicle that does not have an autonomous driving mode.

It is sufficient that the headrest moving mechanism 30 is structured to rotate the stay seat 32 to the front side. The headrest moving mechanism 30 is not limited to the structure in which the turning axle 34 is rotated by the electric motor 36. For example, a structure is applicable in which an upper end portion of a rod (not shown in the drawings) that extends in the vertical direction is connected to the rear end portion 32B of the stay seat 32, and the rod is moved up by an actuator or the like, which is not shown in the drawings, so as to rotate the stay seat 32 to the front side. Thus, the structure that rotates the stay seat 32 to the front side is not particularly limited.

## Claims

1. A vehicle seat (12), comprising:
a seatback (16) that is tiltable backward; and
a headrest (18) provided at the seatback (16),
wherein, in a case in which a backward tilting angle of the seatback (16) is at least a predetermined angle and a frontal collision of the vehicle (10) is predicted, the headrest (18) is configured to move toward a seat front-upper side relative to the seatback (16).

2. The vehicle seat (12) according to claim 1, wherein:
the seatback (16) includes a seatback frame (20),
a headrest moving mechanism (30) is provided at an upper portion of the seatback frame (20),
the headrest moving mechanism (30) includes a stay seat (32) that supports a headrest stay (17) of the headrest (18), and,
in the case in which the backward tilting angle of the seatback (16) is at least the predetermined angle and the frontal collision of the vehicle (10) is predicted, the headrest moving mechanism (30) rotates the stay seat (32) to the seat front side and causes the headrest (18) to move toward the seat front-upper side, a front end portion of the stay seat (32) serving as a rotation pivot.

3. The vehicle seat (12) according to claim 2, wherein the headrest moving mechanism (30) moves the headrest (18) such that the headrest (18) is configured to push a rear head area of a head of a seated occupant (P), the rear head area being at an upper side relative to a center of gravity (G) of the head (H).

4. The vehicle seat (12) according to claim 2 or claim 3, wherein:
the headrest moving mechanism (30) does not activate when the backward tilting angle of the seatback (16) is less than the predetermined angle, and
when the backward tilting angle of the seatback (16) is greater than the predetermined angle, a movement amount of the headrest (18) is increased in accordance with an amount of increase of the backward tilting angle.

5. The vehicle seat (12) according to claim 1, wherein the seatback (16) comprises:
an upper seatback (16U) at which the headrest (18) is provided;
a lower seatback (16D) that supports the upper seatback (16U) rotatably in a seat front-rear direction; and
a seatback turning mechanism (40) that is configured to rotate the upper seatback (16U) toward the seat front side relative to the lower seatback (16D),
wherein, in the case in which the backward tilting angle of the lower seatback (16D) is at least the predetermined angle and the frontal collision of the vehicle (10) is predicted, the seatback turning mechanism (40) activates.

6. The vehicle seat (12) according to any one of claims 2 to 4, wherein the seatback (16) comprises:
an upper seatback (16U at which the headrest (18) and the headrest moving mechanism (30) are provided;
a lower seatback (16D) that supports the upper seatback (16U) rotatably in a seat front-rear direction; and
a seatback turning mechanism (40) that rotates the upper seatback (16U) toward the seat front side relative to the lower seatback (16D),
wherein, in the case in which the backward tilting angle of the lower seatback (16D) is at least the predetermined angle and the frontal collision of the vehicle (10) is predicted, the seatback turning mechanism (40) and the headrest moving mechanism (30) activate.
